# EUROPEAN PATENT APPLICATION

(11) **EP 4 629 549 A1**
(43) Date of publication of application: **08.10.2025**
(21) Application number: 25167565.8
(22) Date of filing: 31.03.2025
(51) Int. Cl.: H04L 5/00, H04W 72/00

(54) **USE OF NON-CONTIGUOUS FREQUENCY RESOURCES IN A SERVING CELL**

(30) Priority: 02.04.2024 US 202418625149
(71) Applicant: Apple Inc., Cupertino, CA 95014 (US)
(72) Inventor: YE, Sigen, Cupertino, 95014 (US); YAO, Chunhai, Chaoyang District, 100022 (CN); YE, Chunxuan, Cupertino, 95014 (US); ZHANG, Dawei, Cupertino, 95014 (US); ZENG, Wei, Cupertino, 95014 (US); CHEN, Xiang, Cupertino, 95014 (US); TANG, Yang, Cupertino, 95014 (US)
(74) Representative: Barton, Russell Glen

(57) **Abstract**

The present application relates to devices and components including apparatus, systems, and methods to use non-contiguous frequency resources in a serving cell. In an example, a network configures, for a UE, non-contiguous frequency segments in the serving cell. Each frequency segment can include contiguous frequency resources. The network can signal, to the UE, that particular subsets of the contiguous frequency resources are activated and can schedule the use of such resources. Downlink transmission and uplink transmission can use the activated subsets across the frequency segments as an aggregated set of frequency resources.

## Description

### CROSS-REFERENCE TO RELATED APPLICATIONS

This application claims the benefit of and priority to U.S. Application No. 18/625,149, filed on April 2, 2024, which is incorporated by reference herein in its entirety for all purposes.

### BACKGROUND

Cellular communications can be defined in various standards to enable communications between a user equipment and a cellular network. For example, Fifth Generation mobile network (5G) is a wireless standard that aims to improve upon data transmission speed, reliability, availability, and more. In such a network, frequency resources can be allocated to a user equipment such that the network and the user equipment can communicate using the allocated frequency resources.

### BRIEF DESCRIPTION OF THE DRAWINGS

FIG. 1 illustrates an example of a network environment, in accordance with some embodiments.
FIG. 2 illustrates an example of frequency segments, in accordance with some embodiments.
FIG. 3 illustrates an example of active frequency resources of frequency segments, in accordance with some embodiments.
FIG. 4 illustrates an example of signaling to schedule frequency resources of frequency segments, in accordance with some embodiments.
FIG. 5 illustrates another example of signaling to schedule frequency resources of frequency segments, in accordance with some embodiments.
FIG. 6 illustrates yet another example of signaling to schedule frequency resources of frequency segments, in accordance with some embodiments.
FIG. 7 illustrates a further example of signaling to schedule frequency resources of frequency segments, in accordance with some embodiments.
FIG. 8 illustrates an example of resources that include frequency resources of a frequency segment, in accordance with some embodiments.
FIG. 9 illustrates an example of a CORESET that includes frequency resources of a multiple frequency segments, in accordance with some embodiments.
FIG. 10 illustrates an example of an operational flow/algorithmic structure for using frequency segments of a serving cell, in accordance with some embodiments.
FIG. 11 illustrates another example of an operational flow/algorithmic structure for using frequency segments of a serving cell, accordance with some embodiments.
FIG. 12 illustrates an example of receive components, in accordance with some embodiments.
FIG. 13 illustrates an example of a UE, in accordance with some embodiments.
FIG. 14 illustrates an example of a base station, in accordance with some embodiments.

### DETAILED DESCRIPTION

Embodiments of the present disclosure are directed to, among other things, using non-contiguous frequency resources in a serving cell. In an example, a network (e.g., a base station thereof) can configure frequency segments in the serving cell for a user equipment (UE). The frequency segments can be non-contiguous in the frequency domain. Each frequency segment can include contiguous frequency resources. Signaling information can indicate that a first set of contiguous frequency resources of a first configured frequency segment is activated for the UE (possibly the entire first frequency segment or, otherwise, a contiguous portion thereof). Similarly, the signaling information can indicate that a second set of contiguous resources of a second configured frequency segment is also activated for the UE. The two sets can be non-contiguous in the frequency domain. Downlink transmissions to the UE and/or uplink transmissions from the UE can be scheduled using the activated frequency resource sets. In particular, the transmissions use the activated sets as an aggregated set of frequency resources of the serving cell.

Embodiments of the present disclosure provide several technical improvements. For example, the embodiments support the use of a non-contiguous spectrum in a serving cell. In this way, the use of the overall spectrum can be more efficient and flexible, while also improving the data throughput and resource allocations to different UEs.

Embodiments of the present disclosure are described in connection with 5G networks. However, the embodiments are not limited as such and similarly apply to other types of communication networks including other types of cellular networks.

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

The following is a glossary of terms that may be used in this disclosure.

The term "circuitry" as used herein refers to, is part of, or includes hardware components, such as an electronic circuit, a logic circuit, a processor (shared, dedicated, or group) or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "base station" as used herein refers to a device with radio communication capabilities, that is a network component of a communications network (or, more briefly, a network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, etc.

The term "network" as used herein reference to a communications network that includes a set of network nodes configured to provide communications functions to a plurality of user equipment via one or more base stations. For instance, the network can be a public land mobile network (PLMN) that implements one or more communication technologies including, for instance, 5G communications.

The term "computer system" as used herein refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "3GPP Access" refers to accesses (e.g., radio access technologies) that are specified by 3GPP standards. These accesses include, but are not limited to, GSM/GPRS, LTE, LTE-A, and/or 5G NR. In general, 3GPP access refers to various types of cellular access technologies.

The term "Non-3GPP Access" refers any accesses (e.g., radio access technologies) that are not specified by 3GPP standards. These accesses include, but are not limited to, WiMAX, CDMA2000, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC), whereas untrusted non-3GPP accesses interwork with the EPC/5GC via a network entity, such as an Evolved Packet Data Gateway and/or a 5G NR gateway. In general, non-3GPP access refers to various types on non-cellular access technologies.

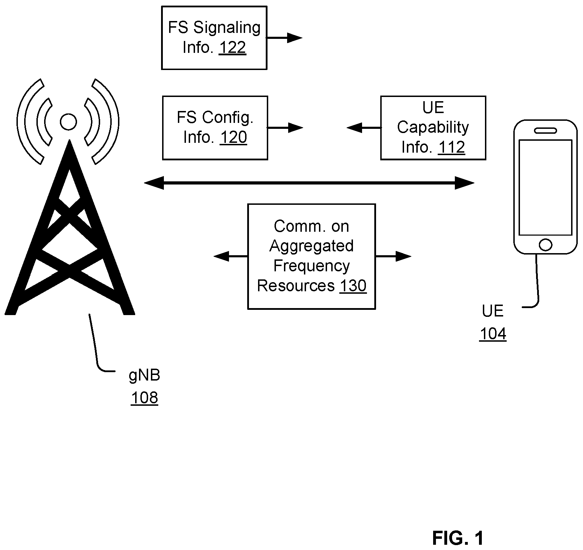

FIG. 1 illustrates a network environment 100, in accordance with some embodiments. The network environment 100 may include a UE 104 and a gNB 108. The gNB 108 may be a base station that provides a wireless access cell, for example, a Third Generation Partnership Project (3GPP) New Radio (NR) cell, through which the UE 104 may communicate with the gNB 108. The UE 104 and the gNB 108 may communicate over an air interface compatible with 3GPP technical specifications, such as those that define Fifth Generation (5G) NR system standards.

The gNB 108 may transmit information (for example, data and control signaling) in the downlink direction by mapping logical channels on the transport channels and transport channels onto physical channels. The logical channels may transfer data between a radio link control (RLC) and MAC layers; the transport channels may transfer data between the MAC and PHY layers; and the physical channels may transfer information across the air interface. The physical channels may include a physical broadcast channel (PBCH), a physical downlink control channel (PDCCH), and a physical downlink shared channel (PDSCH).

The PBCH may be used to broadcast system information that the UE 104 may use for initial access to a serving cell. The PBCH may be transmitted along with physical synchronization signals (PSS) and secondary synchronization signals (SSS) in a synchronization signal block (SSB). The SSBs may be used by the UE 104 during a cell search procedure (including cell selection and reselection) and for beam selection.

The PDSCH may be used to transfer end-user application data, signaling radio bearer (SRB) messages, system information messages (other than, for example, MIB), and SIs.

The PDCCH may transfer downlink control information (DCI) that is used by a scheduler of the gNB 108 to allocate both uplink and downlink resources. The DCI may also be used to provide uplink power control commands, configure a slot format, or indicate that preemption has occurred.

The gNB 108 may also transmit various reference signals to the UE 104. The reference signals may include demodulation reference signals (DMRSs) for the PBCH, PDCCH, and PDSCH. The UE 104 may compare a received version of the DMRS with a known DMRS sequence that was transmitted to estimate an impact of the propagation channel. The UE 104 may then apply an inverse of the propagation channel during a demodulation process of a corresponding physical channel transmission.

The reference signals may also include a channel state information reference signal (CSI-RS). The CSI-RS may be a multi-purpose downlink transmission that may be used for CSI reporting, beam management, connected mode mobility, radio link failure detection, beam failure detection and recovery, and fine-tuning of time and frequency synchronization.

The reference signals and information from the physical channels may be mapped to resources of a resource grid. There is one resource grid for a given antenna port, subcarrier spacing configuration, and transmission direction (for example, downlink or uplink). The basic unit of an NR downlink resource grid may be a resource element, which may be defined by one subcarrier in the frequency domain and one orthogonal frequency division multiplexing (OFDM) symbol in the time domain. Twelve consecutive subcarriers in the frequency domain may compose a physical resource block (PRB). A resource element group (REG) may include one PRB in the frequency domain, and one OFDM symbol in the time domain, for example, twelve resource elements. A control channel element (CCE) may represent a group of resources used to transmit PDCCH. One CCE may be mapped to a number of REGs (for example, six REGs).

The UE 104 may transmit data and control information to the gNB 108 using physical uplink channels. Different types of physical uplink channels are possible including, for instance, a physical uplink control channel (PUCCH) and a physical uplink shared channel (PUSCH). Whereas the PUCCH carries control information from the UE 104 to the gNB 108, such as uplink control information (UCI), the PUSCH carries data traffic (e.g., end-user application data), and can carry UCI.

The UE 104 and the gNB 108 may perform beam management operations to identify and maintain desired beams for transmission in the uplink and downlink directions. The beam management may be applied to both PDSCH and PDCCH in the downlink direction, and PUSCH and PUCCH in the uplink direction.

In an example, communications with the gNB 108 and/or the base station can use channels in the frequency range 1 (FR1), frequency range 2 (FR2), and/or a higher frequency range (FRH). The FR1 band includes a licensed band and an unlicensed band. The NR unlicensed band (NR-U) includes a frequency spectrum that is shared with other types of radio access technologies (RATs) (e.g., LTE-LAA, WiFi, etc.). A listen-before-talk (LBT) procedure can be used to avoid or minimize collision between the different RATs in the NR-U, whereby a device should apply a clear channel assessment (CCA) check before using the channel.

In an example, the communication between the gNB 108 and the UE 104 relies on frequency segments that are non-contiguous in the frequency domain. In particular, the UE 104 can send UE capability information 112 indicating its capability to support frequency segments. This capability information 112 can indicate, among other things, the maximum number of frequency segments that the UE can support in a serving cell, the maximum total number of frequency segments in all serving cells in a frequency range or across all frequency ranges, and/or the maximum combined bandwidth for a serving cell. The value of the maximum combined bandwidth may be frequency range dependent. Based on the UE capability information 112, the gNB 108 can configure frequency segments for the UE 104 in a serving cell. This can include the gNB 108 sending frequency segment configuration information 120 to the UE 104 indicating configurations of frequency segments in the serving cell. The frequency segment may not be contiguous, and each can include contiguous frequency resources (e.g., contiguous resource elements in the frequency domain spanning a fraction, the entirety, or more than one PRB). The frequency segment configuration information 120 can be sent via radio resource control (RRC) signaling. The gNB 108 can also send frequency segment signaling information 122 to the UE 104. The frequency segment signaling information 122 can activate some or all of the configured frequency resources of the configured frequency segments. The active frequency resources (e.g., including a first set belonging to a first configured frequency segment and a second set belonging to a second configured frequency segment) may not be contiguous in the frequency domain. The frequency segment signaling information 122 can be sent via RRC, media access control (MAC) control element (CE), and/or downlink control information (DCI). In the case of DCI, the DCI can also schedule resource elements for the communication between the gNB 108 and the UE 104 (e.g., downlink transmission to the UE 104 and/or uplink transmission from the UE 104). If RRC and/or MAC CE is used, DCI can be subsequently sent for the scheduling. In both cases, the scheduled resource elements include, in the frequency domain, at least some or all of the active frequency resources. Generally, the DCI can schedule a PDSCH or a PUSCH that uses all the allocated frequency resources, which may span multiple frequency segments. For PDCCH, the allocated frequency resources can span a single frequency segment or multiple frequency segments. For PUCCH, the allocated frequency resources can span a single frequency segment. Less preferably, for PUCCH, the allocated frequency resources can span multiple frequency segments, which cannot maintain the single-carrier waveform anymore. Thereafter, the communication can occur using, in the frequency domain, the scheduled frequency resources as an aggregated set of frequency resources 130. These and other aspects of the present disclosure are further described in the next figures.

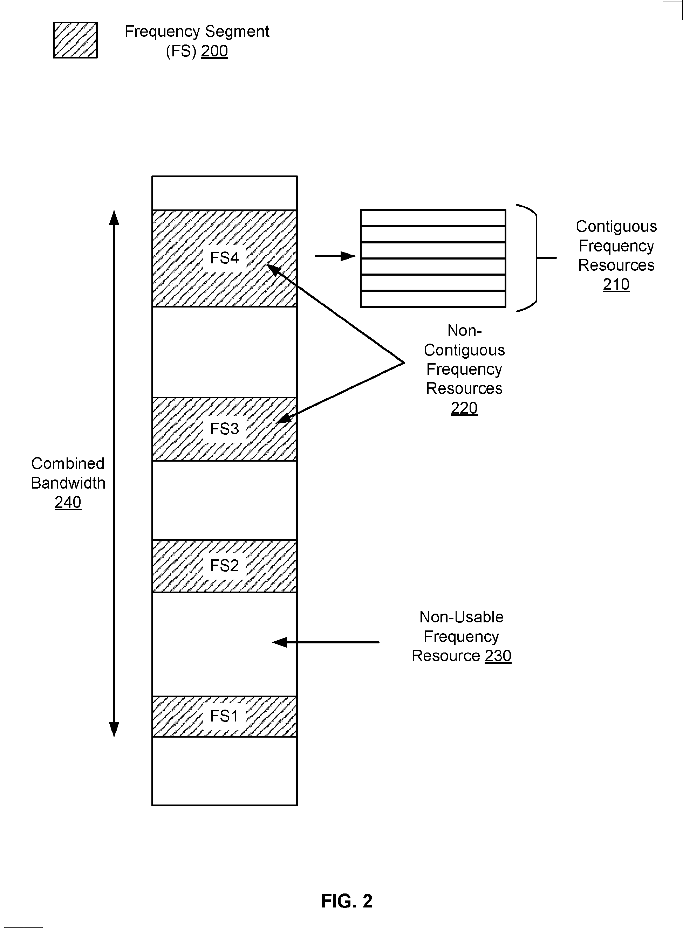

FIG. 2 illustrates an example of frequency segments 200, in accordance with some embodiments. A frequency segment can be abbreviated herein as FS. A frequency segment can include multiple contiguous frequency resources of a serving cell. Each frequency resource can be one or more of subcarriers. Each frequency segment can be a portion of a carrier or one or more carriers. Generally, a serving cell can cover multiple intra-band non-contiguous frequency segments and/or inter-band non-contiguous frequency segments. The frequency segments are typically sufficiently close such that they share similar time and/or frequency synchronization information, pathloss, signal strength, quasi co-location (QCL), etc. The frequency segments can be useful for handling fragmented resources that many operators may have in a band or adjacent band.

The frequency domain is illustrated on the vertical axis in FIG. 2. Four frequency segments 200 of a serving cell are shown: FS1, FS2, FS3, and FS4. The frequency resources of FS4 are also illustrated. In particular, FS4 includes six contiguous frequency resources 210. Each of such contiguous frequency resources 210 can be a subcarrier. The number of contiguous frequency resources of one frequency segment can be different than that of another frequency segment. FS4 and FS3 are non-contiguous in the frequency domain, whereby they are separated by frequency resources that do not belong to any of them. As such, FS4 and FS3 are said to include non-contiguous frequency resources 220 (e.g., while each of FS4 and FS3 include contiguous frequency resources on its own, collectively FS4 and FS3 include the non-contiguous frequency resources 220). The frequency resources that separate two frequency segments in the frequency domain can be referred to as non-usable frequency resources 230 (e.g., as shown between FS2 and FS1).

The frequency segments 200 define a combined bandwidth 240. This combined bandwidth 240 includes the frequency resources of the frequency segments 200 from the lowest frequency (e.g., the first frequency resource in FS1) to the highest frequency (e.g., the last frequency resources in FS4). As such, the combined bandwidth 240 includes usable frequency resources (e.g., those belonging to the frequency segments 200 and that can be aggregated for an uplink and/or downlink transmission such as a PUSCH, PUCCH, PDSCH, and/or a PDCCH transmission) and non-usable frequency resources (e.g., the ones separating the frequency segments 200).

A UE may be configured (e.g., by using the frequency segment configuration information 120 of FIG. 1) with frequency resource configuration for the serving cell. This corresponds to all the frequency resources (e.g., PRBs) that can be potentially used in the serving cell. In the example of FIG. 2, this can include the aggregation of FS1, FS2, FS3, and FS4.

To configure the frequency segments 220, each frequency segment can be signaled individually. For example, the configuration information can separately indicate, for each frequency segment, a starting offset with respect to a reference point (e.g. Point A in NR) and a bandwidth. An example is shown below, where "OffsetToCarrierList" can be an information element (IE) for a list of the offsets, and where "segmentBandwidthList" can be an IE for a list of the bandwidths.

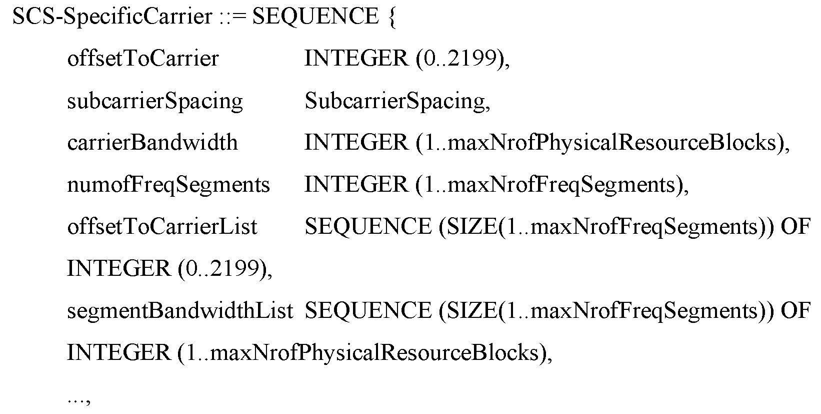

Another example can include reusing an "offsetToCarrier" IE and a "carrierBandwidth" IE (shown above) to signal the first frequency segment (e.g., FS1 in FIG. 2). Additional parameters can be used to signal the remaining frequency segments (e.g., FS2 can be indicated with respect to FS1).

Rather than individual signaling, the combined bandwidth can be relied on to configure the frequency segments 220. In particular, the combined bandwidth can be signaled using, for example, a starting offset with respect to a reference point (e.g. Point A in NR) and a bandwidth. This can reuse parameters such as offsetToCarrier and carrierBandwidth. In this case, additional signaling is used to indicate the frequency segments within the combined bandwidth. For example, a bitmap can be used to indicate the usable resources within the combined bandwidth. To illustrate, consider that the maximum number of PRBs for the combined bandwidth is two-hundred seventy-five. Accordingly, a 275-bit bitmap can be used, where each bit corresponds to one of the PRBs. Each set of consecutive bits having a particular binary value (e.g. each set of consecutive '1's) in the bitmap can correspond to one frequency segment. In another example, each frequency segment is indicated with a starting offset with respect to the lowest frequency of the combined bandwidth and a bandwidth. This is similar to the previous example, except that the reference point is the lowest frequency of the combined bandwidth instead of Point A. This type of signaling can reduce the number of bits to indicate the offset.

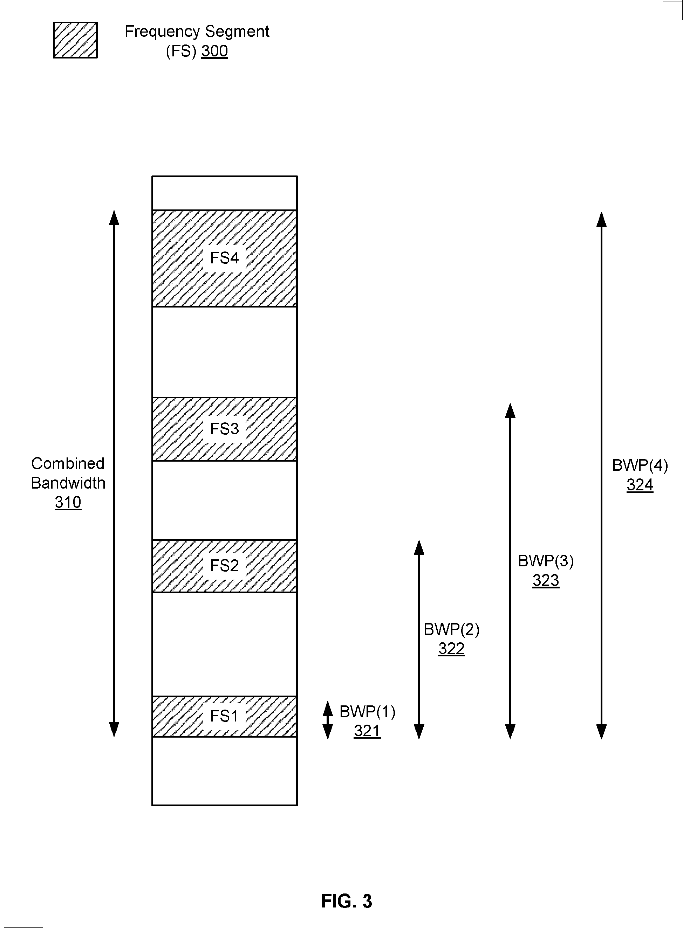

FIG. 3 illustrates an example of active frequency resources of frequency segments 300, in accordance with some embodiments. The frequency segments 300 are similar to the ones of FIG. 2 and are shown as FS1, FS2, FS3, and FS4. A combined bandwidth 310 spans the frequency segments 300 (e.g., includes all the frequency resources of the frequency segments, starting with the frequency resource having the lowest frequency and ending with the frequency resource having the highest frequency).

Active frequency resources may be configured for or indicated to a UE via higher layer signaling, such as RRC signaling and/or MAC CE, and /or layer 1 (L1) signaling, such as DCI. The active frequency resources can be actively used for communications at a given time. The active frequency resources can be any subset of the available resources (including non-contiguous subsets within a configured frequency segment). Practically more benefit can be gained by allocating contiguous resources within each frequency segment. In addition, it is not very desirable to allocate multiple frequency segments but with a partial allocation within each frequency segment (e.g., a subset of contiguous frequency resources within each frequency segment). With these considerations, there can be different options to indicate the active frequency resources.

In an example, one or more bandwidth parts (BWPs) for each frequency segment can be configured. A BWP of a frequency segment represents a part of the bandwidth of the frequency segment (e.g., includes a subset of contiguous frequency resources within the frequency segment). The signaling (e.g., DCI) can indicate one of the configured BWPs or the 'not used' BWP(s) for each FS. The 'not used' indication may be achieved by using an empty BWP. Multiple BWPs across the configured frequency segments 300 may be active at the same time for the serving cell. In this example, the signaling can separately indicate the active BWP for each frequency segment (e.g., can separately include a BWP index for each frequency segment). Alternatively, a table (or some other data structure) can be configured via higher layer signaling. Each entry of the table includes a BWP indication for each of the frequency segments 300. A dynamic signaling can indicate an index for an entry of the table. This approach can reduce the signaling overhead if such indication is carried in a DCI.

In another example, and as shown in FIG. 3, one or more BWPs are configured within the combined bandwidth 310. FIG. 3 shows four BWPs: BWP(1) 321 that spans FS1, BWP(2) 322 that spans FS1 and FS2, BWP(3) 323 that spans FS1, FS2, and FS3, and BWP(4) 324 that spans all four frequency segments 300. The signaling (e.g., DCI) can indicate one of the configured BWPs (e.g., BWP(1) 321, BWP(2) 322, BWP(3) 323), or BWP(4) 324). The indicated BWP corresponds to frequency resources in one or more frequency segments (e.g., if BWP(2) 322 is indicated, the frequency resources of FS1 and FS2 are activated). Here, an indicated BWP can include contiguous frequency resources within the combined bandwidth (not only within the frequency segments; for example, BWP(2) 322 includes the frequency resources of FS1 and FS2 and the non-usable frequency resources between FS1 and FS2). The active frequency resources are the intersection of the indicated BWP and the configured frequency resources of the serving cell. The UE can determine this intersection based on the configuration information and the signaling information. Although FIG. 3 illustrates that each BWP covers the entire frequency segment(s), a BWP can cover only a part thereof (e.g., BWP(1) 321 may cover only a half of FS1). This approach can be more restrictive than the approach of the previous example, (e.g., would not support activating only FS1 and FS3), but it may provide sufficient flexibility.

The BWP can be configured differently and/or the different BWPs can be activated for different UEs. This flexibility in the configuration and activation can support load balancing.

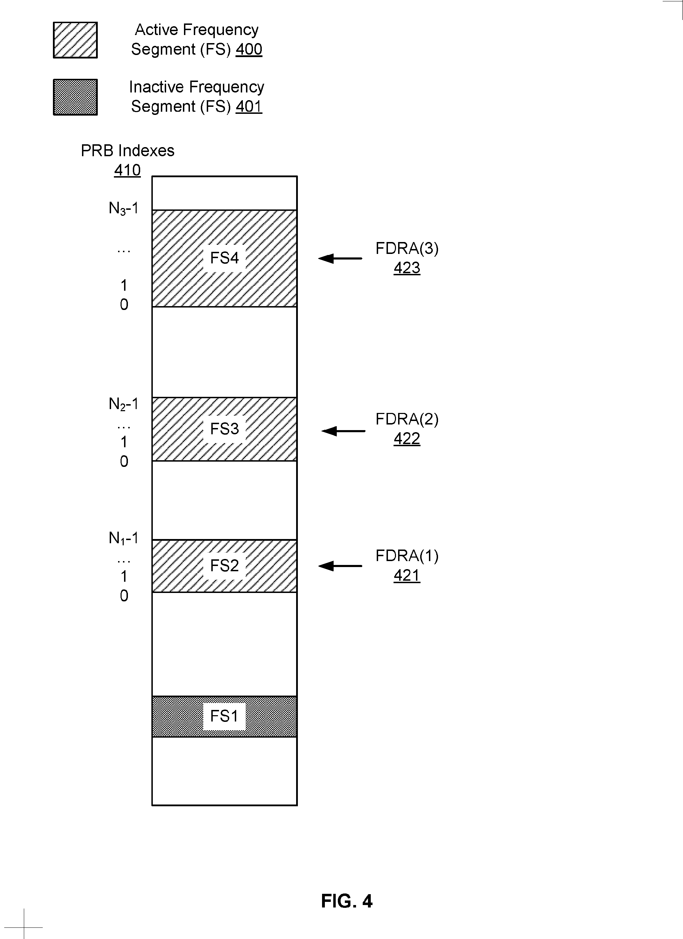

FIG. 4 illustrates an example of signaling to schedule frequency resources of frequency segments, in accordance with some embodiments. The signaling may, but need not, be the same as the signaling for activating particular frequency resources of the frequency segments.

In the illustration of FIG. 4, four frequency segments are configured (similar to FIG. 2) and are shown as FS1, FS2, FS3, and FS4. Out of the four, three are active frequency segments 400: FS2, FS3, and FS4 (e.g., activated per the signaling of FIG. 3). Further, out of the four, one is an inactive frequency segment 401: FS1 (whereby its frequency resources are not used for uplink and/or downlink transmissions).

In an example, the signaling to schedule uplink and/or downlink transmissions on the active frequency resources (e.g., those of the active frequency segments 400) includes DCI that indicates frequency domain resource allocation (FDRA). FIG. 4 illustrates one possible implementation for the FDRA.

In particular, the FDRA indication is separately signaled for each frequency segment. For example, a first FDRA(1) 421 is used to signal FS2, a second FDRA(2) 422 is used to signal FS3, and a third FDRA(3) 423 is used to signal FS4. These three FDRAs 421-423 can be indicated in the DCI (e.g., represented by separate bits). The FDRA indication for each FS can reuse the existing mechanism, such as an uplink or downlink resource allocation "type 0" or "type 1" in NR. The aggregated frequency resources are used for transmission (e.g., in this case, the frequency resources of FS2, FS3, and FS4).

The FDRA indication for each frequency segment can reference PRB indexes 410. In particular, the PRBs can indexed within the active bandwidth of each FS ("0 to N₁-1" within the active BWP of FS2, "0 to N₂-1" within the active BWP of FS3, and "0 to N₃-1" within the active BWP of FS4.). As such, FDRA(1) 421 indicates the PRB indexes "0 to N₁-1," FDRA(2) 422 indicates the PRB indexes "0 to N₂-1," and FDRA(3) 423 indicates the PRB indexes "0 to N₃-1."

The number of bits needed for each FDRA can depend on the active bandwidth within the corresponding frequency segment (e.g., the number of the active frequency resources within the frequency segment). One code point (e.g., all "0's") for an FDRA of a frequency segment can correspond to the case when no resource in the frequency segment is allocated.

In an example, an FDRA indication is provided for each frequency segment in the configured frequency resources for the frequency segment. This avoids the ambiguity when the active frequency resources are changed. In another example, an FDRA indication is only provided for each frequency segment in the active frequency resources for the frequency segment. This can save DCI overhead compared to the previous example.

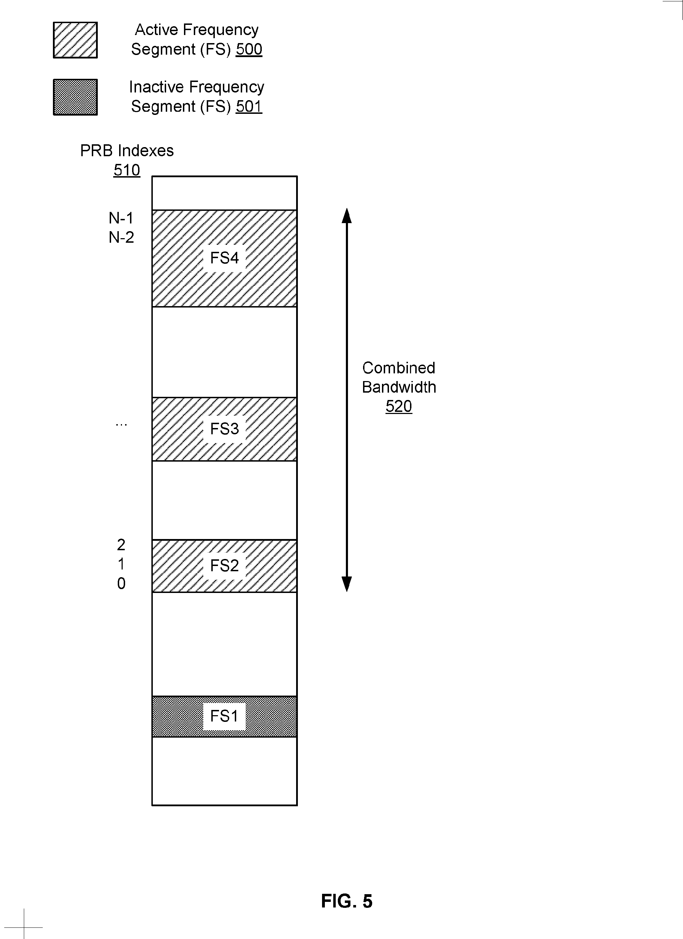

FIG. 5 illustrates another example of signaling to schedule frequency resources of frequency segments, in accordance with some embodiments. Like FIG. 4, four frequency segments are configured and are shown as FS1, FS2, FS3, and FS4. Out of the four, three are active frequency segments 500: FS2, FS3, and FS4. Out of the four, one is an inactive frequency segment 501: FS1.

A combined bandwidth 520 represents the bandwidth spanning the active frequency segments 500. In particular, the combined bandwidth part 520 includes the frequency resource of the active frequency segments 500 having the lowest frequency (e.g., the first frequency resource in FS2), the frequency resource of the active frequency segments 500 having the highest frequency (e.g., the last frequency resource in FS4), and the frequency resources in between including active and non-usable frequency resources between the active frequency segments 500 (e.g., the remaining active frequency resources of FS2, the non-usable frequency resources between FS2 and FS3, the active frequency resource of FS3,the non-usable frequency resources between FS3 and FS4, and the remaining active frequency resources of FS4).

FDRA-based indications in DCI can indicate the usable frequency resources of the active frequency segments 500 (e.g., the usable frequency resources within the combined bandwidth 520). Unlike FIG. 4, here PRB indexes 510 are numbered within the combined bandwidth 520, from the lowest frequency resources to the highest frequency resources (e.g., the first frequency resource in FS2 has a PRB index of "0," whereas the last frequency resource in FS4 has a PRB index of "N-1," where the combined bandwidth includes "N" frequency resources).

The FDRA can indicate the entire or a part of the combined bandwidth 520. Because the combined bandwidth 520 includes non-usable frequency resources, the UE may only consider the usable part in the indicated frequency resources and may ignore the non-usable part. In other words, whereas the FDRA can indicate a first set of frequency resources of the combined bandwidth 520, and whereas a second set of frequency resources is configured or activated for the UE, the UE can consider the intersection of these two sets as the usable frequency resources.

In an example, for bitmap-based FDRA indication where one bit corresponds to a resource block group (RBG) (e.g., an uplink or downlink resource allocation "type 0" in NR), an RBG may include both usable RBs and non-usable RBs. A bit of "1" means the usable RBs in the RBG is allocated for transmission.

In another example, a consecutive number of RBs or RBGs can be indicated (e.g., downlink or uplink resource allocation "type 1" in NR). In this case, only the usable RBs within the indicated resources may be used for transmission.

The example signaling of FIG. 5 can be more beneficial than that of FIG. 4 when the frequency resources for different carriers are not too far from each other (e.g., in cases of intra-band or contiguous inter-band spectrum). Further, a maximum combined bandwidth may be defined for a serving cell. The maximum bandwidth may depend on the frequency range (e.g., 100 MHz for FR1 and 400M Hz for FR2).

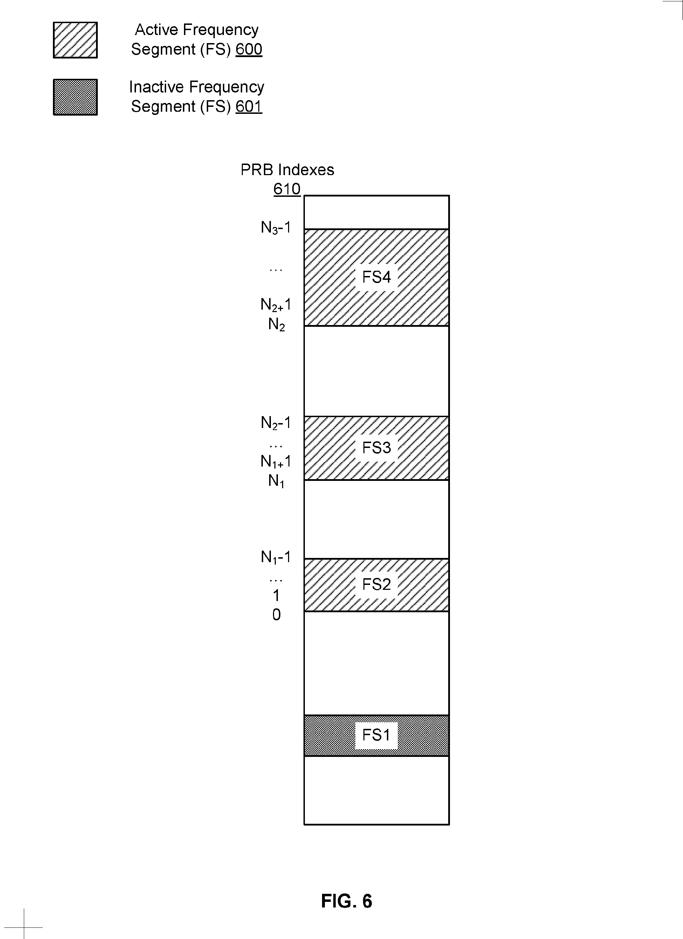

FIG. 6 illustrates yet another example of signaling to schedule frequency resources of frequency segments, in accordance with some embodiments. Like FIG. 4, four frequency segments are configured and are shown as FS1, FS2, FS3, and FS4. Out of the four, three are active frequency segments 600: FS2, FS3, and FS4. Out of the four, one is an inactive frequency segment 601: FS1.

Here also, FDRA-based indications in DCI can indicate the usable frequency resources of the active frequency segments 600. Unlike FIG. 4, here PRB indexes 610 are numbered across all the active frequency segments 600, excluding the non-usable frequency resources in between. For example, the PRB indexes start at "0" corresponding to the first active frequency resource of FS2 (e.g., the one having the lowest frequency in FS2), continue to "N₁-1" corresponding to the last active frequency resource of FS2 (e.g., the one having the highest frequency in FS2, where N₁ frequency resources are active within FS2), skip the non-usable frequency resources between FS2 and FS3, continue at "N₁" corresponding to the first active frequency resource of FS3 (e.g., the one having the lowest frequency in FS3), continue to "N₂-1" corresponding to the last active frequency resource of FS3 (e.g., the one having the highest frequency in FS3, where N₂ frequency resources are active within FS3), skip the non-usable frequency resources between FS3 and FS4, continue at "N₂" corresponding to the first active frequency resource of FS4 (e.g., the one having the lowest frequency in FS4), and end at "N₃-1" corresponding to the last active frequency resource of FS4 (e.g., the one having the highest frequency in FS4, where N₃ frequency resources are active within FS4). Based on such PRB indexing scheme, the FDRA indication can reuse the existing mechanism, such as an uplink or downlink resource allocation "type 0" or "type 1" in NR.

A maximum bandwidth may be defined for the aggregated bandwidth of all the active frequency segments 600. The maximum bandwidth may depend on the frequency range.

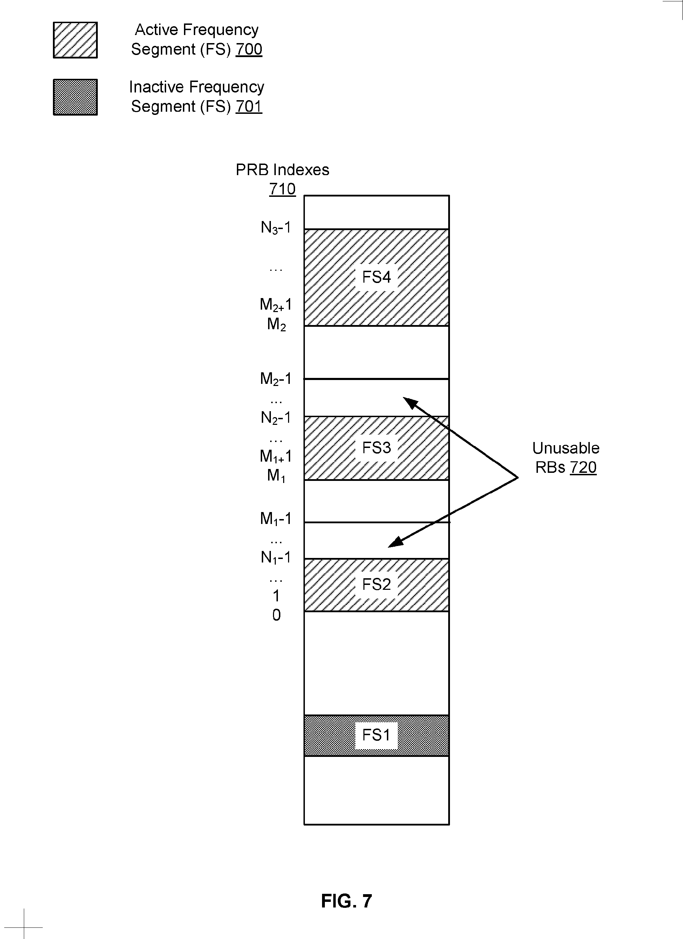

FIG. 7 illustrates a further example of signaling to schedule frequency resources of frequency segments, in accordance with some embodiments. Like FIG. 6, four frequency segments are configured and are shown as FS1, FS2, FS3, and FS4. Out of the four, three are active frequency segments 700: FS2, FS3, and FS4. Out of the four, one is an inactive frequency segment 701: FS1.

Here also, FDRA-based indications in DCI can indicate the usable frequency resources of the active frequency segments 700. Here a bitmap-based FDRA indication can be used, where one bit corresponds to an RBG. An RBG may include multiple RBs (or, equivalently, PRBs). Hence, a bit of the bitmap can correspond to an RBG and, thus, indicate multiple RBs. Using the example signaling mechanism in FIG. 6, it can result in one RBG across multiple FSs if one FS does not have an integer multiple of RBGs. To avoid such a case, in FIG. 7, the active bandwidth in frequency segment can be expanded to a nominal bandwidth that is an integer multiple of RBGs. In this case, the first RB of a carrier can correspond to the start of an RBG, and each RBG is contained within one FS only.

To illustrate, consider the following example. FS2 includes ten active RBs, FS3 includes twenty-five active RBs, and FS4 includes fifty active RBs. Assume that each RBG includes four RBs. For FS2, "N1" and "M1" in PRB indexes 710 are ten and twelve (twelve being nominal bandwidth that is an integer multiple of RBGs, where three RBGs equal to twelve RBs which is the smallest possible integer multiple that is larger than ten-the number of active RBs within FS2). The usable RBs indicated by the FDRA for FS2 are indexed from "0" to "9," consisting of three RBGs, with the last RBG having only two usable RBs. The last two RB of the last RBG (indexed "10" and "11", or more broadly the RBs having indexes from "N₁" to "M₁-1") are part of unusable RBs 720.

Similarly, for FS3, "N2" and "M2" in the PRB indexes 710 are thirty-seven (equal to twelve plus twenty-five) and forty (the nominal integer). The usable RBs indicated by the FDRA for FS3 are indexed from "12" to "36," consisting of seven RBGs, with the last RBG having only one usable RB. The last three RBs of the last RBG (indexed "37", "38", and "39", or more broadly the RBs having indexes from "N₂" to "M₂-1") are part of the unusable RBs 720.

Similarly, for FS4, "N3" in the PRB indexes 710 is ninety (equal to forty plus fifty). The usable RBs indicated by the FDRA for FS4 are indexed from "40" to "89," consisting of thirteen RBGs, with the last RBG having only two usable RBs.

In the above illustration, a total of twenty-three RBGs can be activated and belong to FS2, FS3, and FS4 (with the last ones in each of FS2, FS3, and FS4 including less than four RBs). As such, a 23-bit bitmap can be for the FDRA. This smaller size of the bitmap (e.g., relative to the example signaling of FIG. 5) can reduce the DCI size.

For bitmap-based FDRA indication, where one bit corresponds an RBG, the RBG size can be determined using different techniques. In one example technique, the size is configured by the network explicitly (e.g., as part of the frequency segment configuration information 120 of FIG. 1). In another example techniques, the RBG size can be predefined in a technical standard with which a UE is compliant. In this case, the technical specification of the RBG size can be a function of a combined bandwidth of a serving cell, a combined active bandwidth of the UE, or a bandwidth of the usable frequency resources.

In FIGS. 4-7, the embodiments are described in connection with using active frequency resources. However, the embodiments are not limited as such. For example, the FDRA indications can be similarly and equivalently be defined with respect to the configured frequency resources. Generally, signaling configured frequency resources can use a larger overhead than signaling active frequency resources.

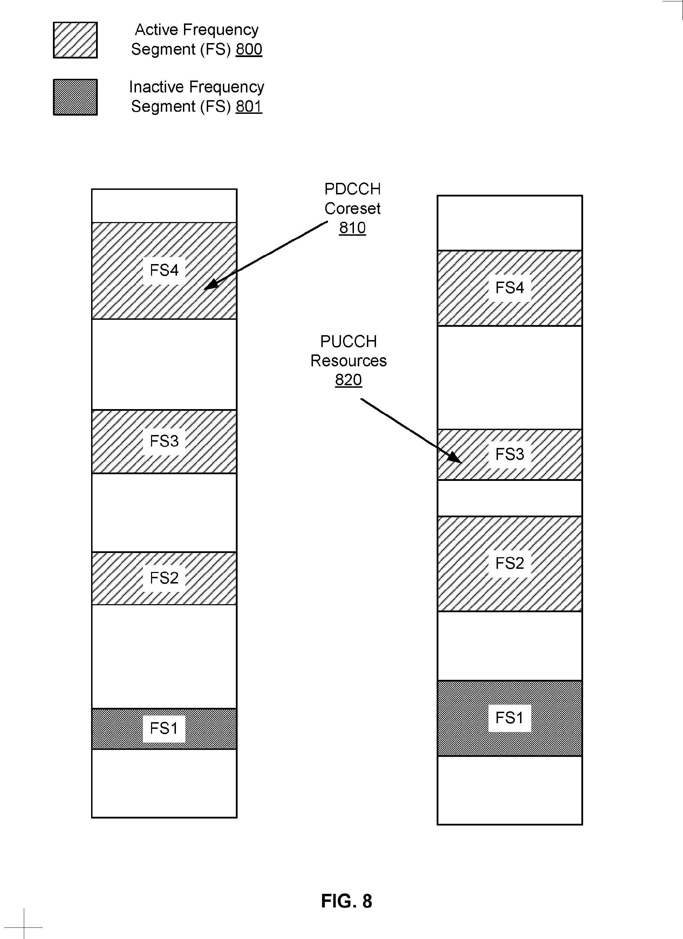

FIG. 8 illustrates an example of a resources that include frequency resources of a frequency segment, in accordance with some embodiments. Like FIG. 4, four frequency segments are configured and are shown as FS1, FS2, FS3, and FS4. Out of the four, three are active frequency segments 800: FS2, FS3, and FS4. Out of the four, one is an inactive frequency segment 801: FS1.

In an example, a a control resource set (CORESET) represents a set of time-frequency resources usable to schedule and allocate resources for downlink control channels. CORESETs can efficiently allocate resources to different UEs and services and can be defined using different parameters such as frequency resources, time resources, and spatial resources.

A CORESET can be defined with respect to one or more frequency segments. For PDCCH, the CORESET can be limited to a single frequency segment. FIG. 8 illustrates this situation, where a PDCCH CORESET 810 includes frequency resources that are within only one of the configured frequency segments (in particular, the active frequency segment FS4).

The PDCCH CORESET 810 can be defined and signaled by a frequency segment index (e.g., an index corresponding to FS4), plus the resource allocation of the PDCCH CORESET 810 within the frequency segment. The resource allocation can include a bitmap indication, where each bit corresponds to a number of RBs (e.g., six) within the frequency segment.

For PUCCH, resources can be allocated thereto, where the frequency resources for each PUCCH resource can be restricted within a single frequency segment, in order to maintain single-carrier waveform. FIG. 8 illustrates this situation, where PUCCH resources 820 includes frequency resources that are within only one of the configured frequency segments (in particular, the active frequency segment FS3). Note that PUCCH is used for uplink, whereas PDCCH is used for downlink. Accordingly, in FIG. 8, the PDCCH Coreset 810 and the PUCCH resources 820 are shown as belonging to resources of different channels that may either differ in frequency (in FDD) or in time (in TDD).

The PUCCH resources 820 can be defined and signaled by adding a parameter in the PUCCH resource configuration to indicate the frequency segment index, and the existing parameters can be reused to indicate the PRB locations within the frequency segment. Alternatively, the starting PRB can be indicated using one of the indexing methods described in FIGS. 5-7.

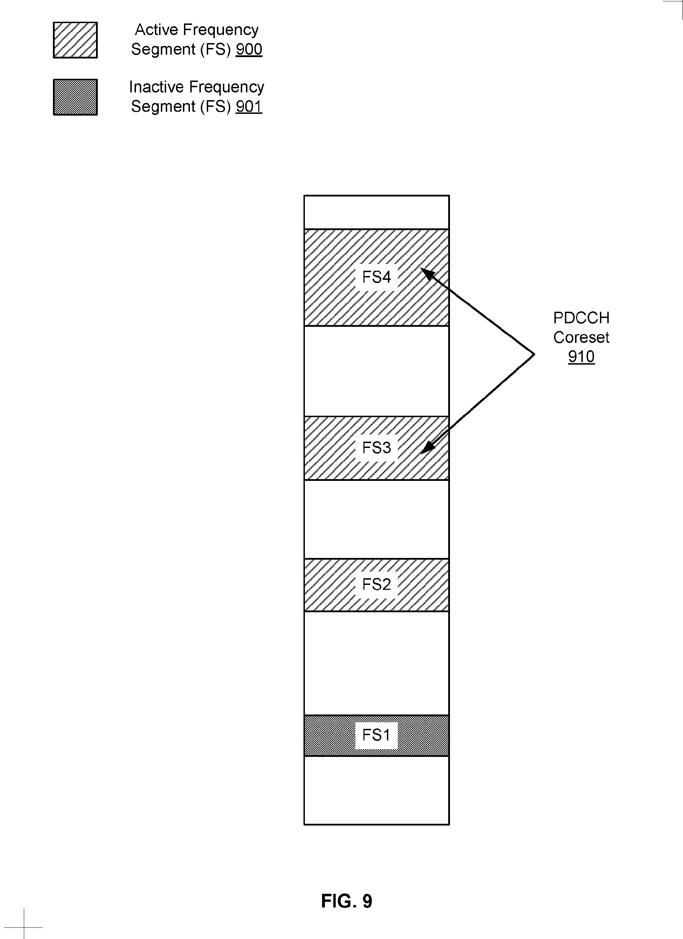

FIG. 9 illustrates an example of a CORESET that includes frequency resources of a multiple frequency segments, in accordance with some embodiments. Like FIG. 8, four frequency segments are configured and are shown as FS1, FS2, FS3, and FS4. Out of the four, three are active frequency segments 800: FS2, FS3, and FS4. Out of the four, one is an inactive frequency segment 801: FS1. Unlike FIG. 8, here a coreset can be defined with respect to more than one frequency segment.

For example, for PDCCH, the coreset can span across multiple frequency segments. FIG. 9 illustrates this situation, where a PDCCH coreset 910 includes frequency resources that are within two of the configured frequency segments (in particular, the active frequency segments FS3 and FS4).

The PDCCH coreset 910 can be defined using FDRA indications, as described in FIGS. 4-7. In case a bitmap is used, where one bit corresponds to multiple contiguous RBs, the FDRA indication of FIG. 7 can be used. Similarly, a PUCCH resource can span across multiple frequency segments.

In other examples, for some reference signals (e.g., CSI-RS), their sequences can be mapped to physical resources. Typically, the mapping uses a "common resource block 0" as the reference. For a serving cell with multiple frequency segments, a single Point A is indicated. In the case of such reference signals, the Point A corresponds to the "common resource block 0," and it is used for the reference signal mapping (e.g., as described in FIG. 2 with respect to a reference point).

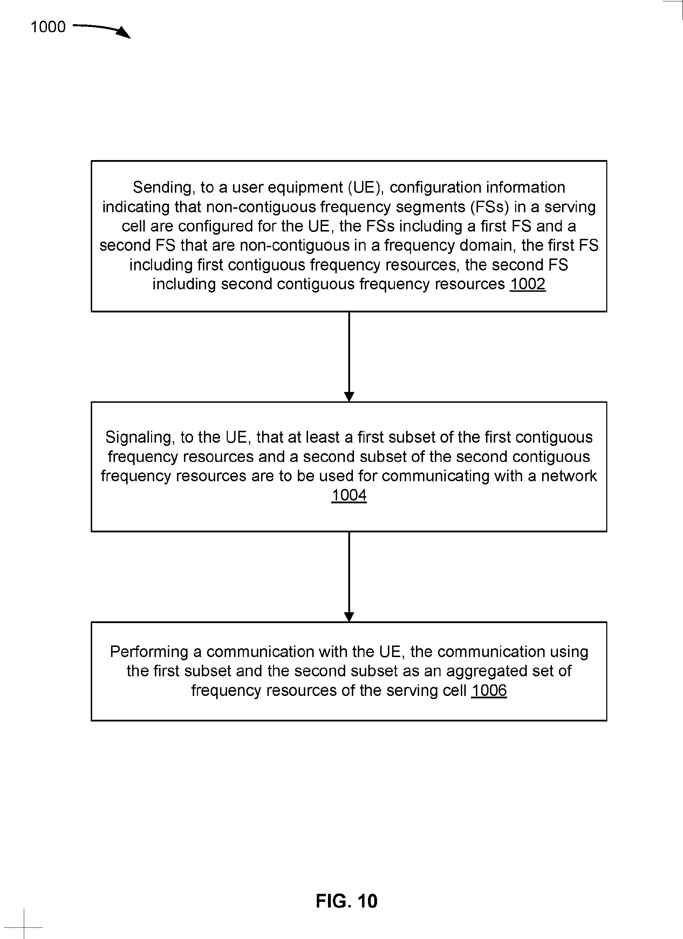

FIG. 10 illustrates an example of an operational flow/algorithmic structure 1000 for using frequency segments of a serving cell, in accordance with some embodiments. The operational flow/algorithmic structure 1000 can be implemented by a network (e.g., by a base station thereof and/or processors of the base station). The network can be any of the networks described herein. In some embodiments, the operational flow/algorithmic structure 1000 may be implemented by executing instructions stored in a tangible, non-transitory, computer-readable storage medium, such as a memory of the base station. While the operational flow/algorithmic structure 1000 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1000 includes, at 1002, sending, to a UE, configuration information indicating that non-contiguous frequency segments (FSs) in a serving cell are configured for the UE. The FSs include a first FS (e.g., FS4 in the above figures) and a second FS (e.g., FS3 in the above figures) that are non-contiguous in a frequency domain. The first FS includes first contiguous frequency resources. The second FS includes second contiguous frequency resources. The configuration information can be sent via RRC signaling and can be based on UE capability information of the UE associated with the use of frequency segments as described in FIGS. 1 and 2. The configuration information can also configure a coreset, as described in FIGS. 8 and 9.

In an example, the operational flow/algorithmic structure 1000 includes, at 1004, signaling, to the UE, that at least a first subset of the first contiguous frequency resources and a second subset of the second contiguous frequency resources are to be used for communicating with a network. The first subset and the second subset are non-contiguous in the frequency domain. For example, the first subset can be particular contiguous frequency resources within the first FS and can form a BWP of the first FS. The signaling here can include any or a combination of RRC signaling, MAC CE signaling, or DCI signaling. The signaling can activate particular ones of the configured frequency resources as described in FIG. 3, and/or schedule the use of active frequency resources as described in FIGS. 4-7.

In an example, the operational flow/algorithmic structure 1000 includes, at 1006, performing a communication with the UE. The communication uses the first subset and the second subset as an aggregated set of frequency resources of the serving cell. For example, downlink transmission and/or uplink transmission can be carried by using PRBs (or other frequency and time domain resources), where at least some of these resources belong (in the frequency domain) to the two subsets.

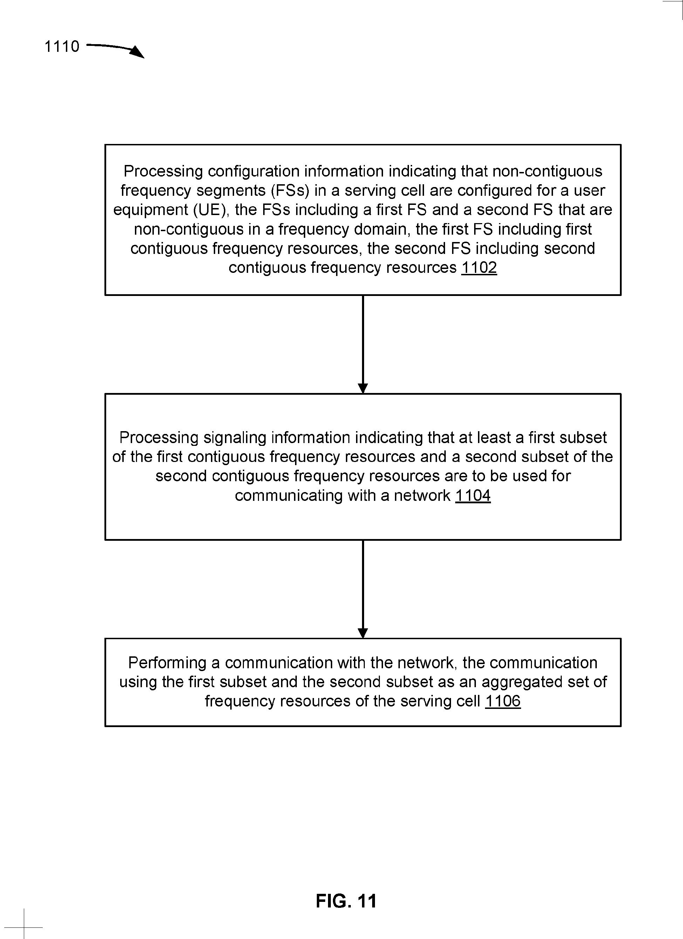

FIG. 11 illustrates another example of an operational flow/algorithmic structure 1100 for using frequency segments of a serving cell, accordance with some embodiments. The operational flow/algorithmic structure 1100 can be implemented by a UE (e.g., performed by components thereof including, for example, processors of the UE). The UE can be any of the UEs described herein. In some embodiments, the operational flow/algorithmic structure 1100 may be implemented by executing instructions stored in a tangible, non-transitory, computer-readable storage medium, such as a memory of the UE. While the operational flow/algorithmic structure 1100 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1100 includes, at 1102, processing configuration information indicating that non-contiguous frequency segments (FSs) in a serving cell are configured for a UE. The FSs include a first FS (e.g., FS4 in the above figures) and a second FS (e.g., FS3 in the above figures) that are non-contiguous in a frequency domain. The first FS includes first contiguous frequency resources. The second FS includes second contiguous frequency resources. The configuration information can be sent via RRC signaling and can be based on UE capability information of the UE associated with the use of frequency segments as described in FIGS. 1 and 2. The configuration information can also configure a coreset, as described in FIGS. 8 and 9.

In an example, the operational flow/algorithmic structure 1100 includes, at 1104, processing signaling information indicating that at least a first subset of the first contiguous frequency resources and a second subset of the second contiguous frequency resources are to be used for communicating with a network. The first subset and the second subset are non-contiguous in the frequency domain. For example, the first subset can be particular contiguous frequency resources within the first FS and can form a BWP of the first FS. The signaling here can include any or a combination of RRC signaling, MAC CE signaling, or DCI signaling. The signaling can activate particular ones of the configured frequency resources as described in FIG. 3, and/or schedule the use of active frequency resources as described in FIGS. 4-7.

In an example, the operational flow/algorithmic structure 1100 includes, at 1106, performing a communication with the network. The communication uses the first subset and the second subset as an aggregated set of frequency resources of the serving cell. For example, downlink transmission and/or uplink transmission can be carried by using PRBs (or other frequency and time domain resources), where at least some of these resources belong (in the frequency domain) to the two subsets.

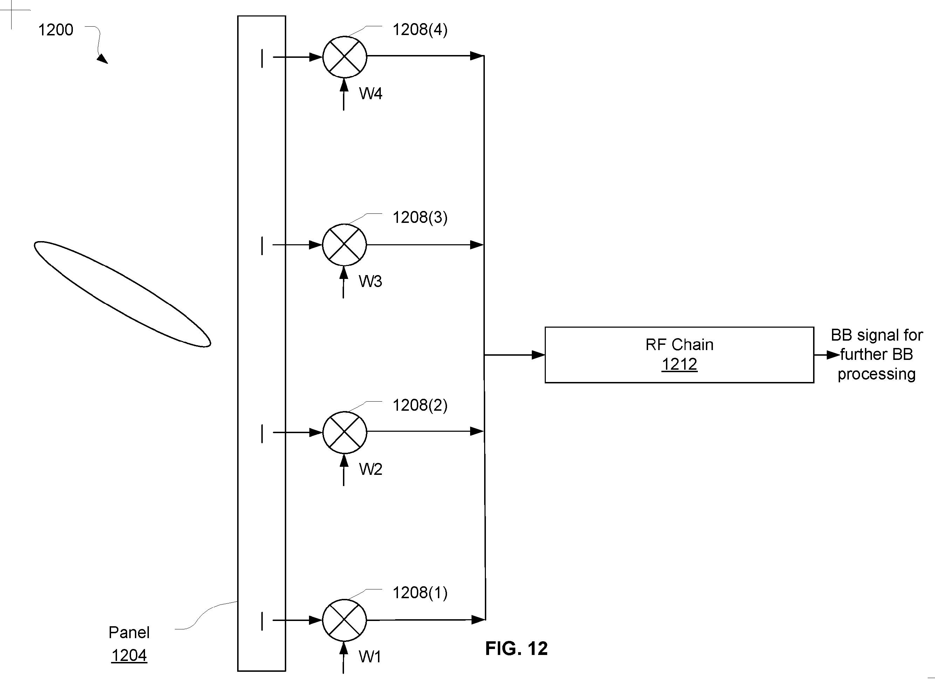

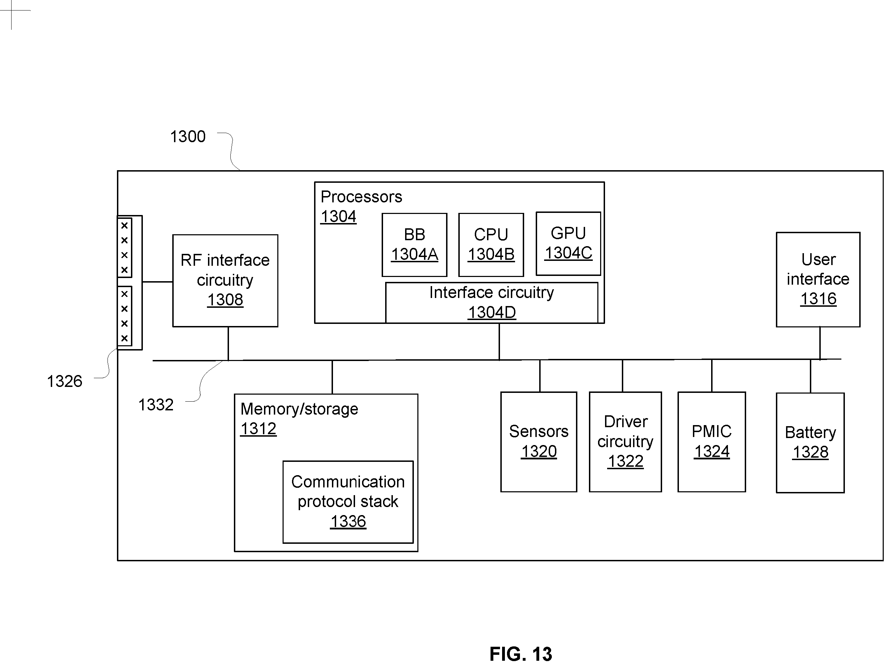

FIG. 12 illustrates receive components 1200 of the UE 104, in accordance with some embodiments. The receive components 1200 may include an antenna panel 1204 that includes a number of antenna elements. The panel 1204 is shown with four antenna elements, but other embodiments may include other numbers. Additional components of the UE 1200 are further described in FIG. 13.

The antenna panel 1204 may be coupled to analog beamforming (BF) components that include a number of phase shifters 1208(1)-1208(4). The phase shifters 1208(1)-1208(4) may be coupled with a radio frequency (RF) chain 1212. The RF chain 1212 may amplify a receive analog RF signal, down-convert the RF signal to baseband, and convert the analog baseband signal to a digital baseband signal that may be provided to a baseband processor for further processing.

In various embodiments, control circuitry, which may reside in a baseband processor, may provide BF weights (for example W1 - W4), which may represent phase shift values, to the phase shifters 1208(1)-1208(4) to provide a receive beam at the antenna panel 1204. These BF weights may be determined based on the channel-based beamforming.

FIG. 13 illustrates a UE 1300, in accordance with some embodiments. The UE 1300 may be similar to and substantially interchangeable with UE 104 of FIG. 1. Particularly, the UE 1300 can receive configuration information indicating configurations of non-contiguous frequency segments in a serving cell. The UE 1300 can also receive frequency segment signaling information activating some or all of the configured frequency resources of the non-contiguous frequency segments. The UE 1300 can then communicate with a network using, in the frequency domain, activated frequency resources as an aggregated set of frequency resources.

Similar to that described above with respect to UE 104, the UE 1300 may be any mobile or non-mobile computing device, such as mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, or relaxed-IoT devices. In some embodiments, the UE may be a reduced capacity UE or NR-Light UE.

The UE 1300 may include processors 1304, RF interface circuitry 1308, memory/storage 1312, user interface 1316, sensors 1320, driver circuitry 1322, power management integrated circuit (PMIC) 1324, and battery 1328. The components of the UE 1300 may be implemented as integrated circuits (ICs), portions thereof, discrete electronic devices, or other modules, logic, hardware, software, firmware, or a combination thereof. The block diagram of FIG. 13 is intended to show a high-level view of some of the components of the UE 1300. However, some of the components shown may be omitted, additional components may be present, and different arrangements of the components shown may occur in other implementations.

The components of the UE 1300 may be coupled with various other components over one or more interconnects 1332, which may represent any type of interface, input/output, bus (local, system, or expansion), transmission line, trace, optical connection, etc. that allows various circuit components (on common or different chips or chipsets) to interact with one another.

The processors 1304 may include processor circuitry, such as baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage 1312 to cause the UE 1300 to perform operations as described herein.

In some embodiments, the baseband processor circuitry 1304A may access a communication protocol stack 1336 in the memory/storage 1312 to communicate over a 3GPP compatible network. In general, the baseband processor circuitry 1304A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1308.

The baseband processor circuitry 1304A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The baseband processor circuitry 1304A may also access group information from memory/storage 1312 to determine search space groups in which a number of repetitions of a PDCCH may be transmitted.

The memory/storage 1312 may include any type of volatile or non-volatile memory that may be distributed throughout the UE 1300. In some embodiments, some of the memory/storage 1312 may be located on the processors 1304 themselves (for example, L1 and L2 cache), while other memory/storage 1312 is external to the processors 1304 but accessible thereto via a memory interface. The memory/storage 1312 may include any suitable volatile or non-volatile memory, such as, but not limited to, dynamic random-access memory (DRAM), static random-access memory (SRAM), erasable programmable read-only memory (EPROM), electrically erasable programmable read-only memory (EEPROM), Flash memory, solid-state memory, or any other type of memory device technology.

The RF interface circuitry 1308 may include transceiver circuitry and a radio frequency front module (RFEM) that allows the UE 1300 to communicate with other devices over a radio access network. The RF interface circuitry 1308 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1350 and proceed to filter and amplify (with a low-noise amplifier) the signal. The signal may be provided to a receiver of the transceiver that down-converts the RF signal into a baseband signal that is provided to the baseband processor of the processors 1304.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1350.

In various embodiments, the RF interface circuitry 1308 may be configured to transmit/receive signals in a manner compatible with NR access technologies.

The antenna 1350 may include a number of antenna elements that each convert electrical signals into radio waves to travel through the air and to convert received radio waves into electrical signals. The antenna elements may be arranged into one or more antenna panels. The antenna 1350 may have antenna panels that are omnidirectional, directional, or a combination thereof to enable beamforming and multiple input, multiple output communications. The antenna 1350 may include microstrip antennas, printed antennas fabricated on the surface of one or more printed circuit boards, patch antennas, phased array antennas, etc. The antenna 1350 may have one or more panels designed for specific frequency bands including bands in FR1 or FR2.

The user interface circuitry 1316 includes various input/output (I/O) devices designed to enable user interaction with the UE 1300. The user interface 1316 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators, such as light emitting diodes (LEDs) and multi-character visual outputs, or more complex outputs, such as display devices or touchscreens (for example, liquid crystal displays (LCDs), LED displays, quantum dot displays, projectors, etc.), with the output of characters, graphics, multimedia objects, and the like being generated or produced from the operation of the UE 1300.

The sensors 1320 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1322 may include software and hardware elements that operate to control particular devices that are embedded in the UE 1300, attached to the UE 1300, or otherwise communicatively coupled with the UE 1300. The driver circuitry 1322 may include individual drivers allowing other components to interact with or control various input/output (I/O) devices that may be present within, or connected to, the UE 1300. For example, driver circuitry 1322 may include a display driver to control and allow access to a display device, a touchscreen driver to control and allow access to a touchscreen interface, sensor drivers to obtain sensor readings of sensor circuitry 1320 and control and allow access to sensor circuitry 1320, drivers to obtain actuator positions of electro-mechanic components or control and allow access to the electro-mechanic components, a camera driver to control and allow access to an embedded image capture device, audio drivers to control and allow access to one or more audio devices.

The PMIC 1324 may manage power provided to various components of the UE 1300. In particular, with respect to the processors 1304, the PMIC 1324 may control power-source selection, voltage scaling, battery charging, or DC-to-DC conversion.

In some embodiments, the PMIC 1324 may control, or otherwise be part of, various power saving mechanisms of the UE 1300. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1300 may power down for brief intervals of time and thus save power. If there is no data traffic activity for an extended period of time, then the UE 1300 may transition off to an RRC_Idle state, where it disconnects from the network and does not perform operations, such as channel quality feedback, handover, etc. The UE 1300 goes into a very low power state and it performs paging where again it periodically wakes up to listen to the network and then powers down again. The UE 1300 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1328 may power the UE 1300, although in some examples the UE 1300 may be mounted deployed in a fixed location and may have a power supply coupled to an electrical grid. The battery 1328 may be a lithium-ion battery, a metal-air battery, such as a zinc-air battery, an aluminum-air battery, a lithium-air battery, and the like. In some implementations, such as in vehicle-based applications, the battery 1328 may be a typical lead-acid automotive battery.

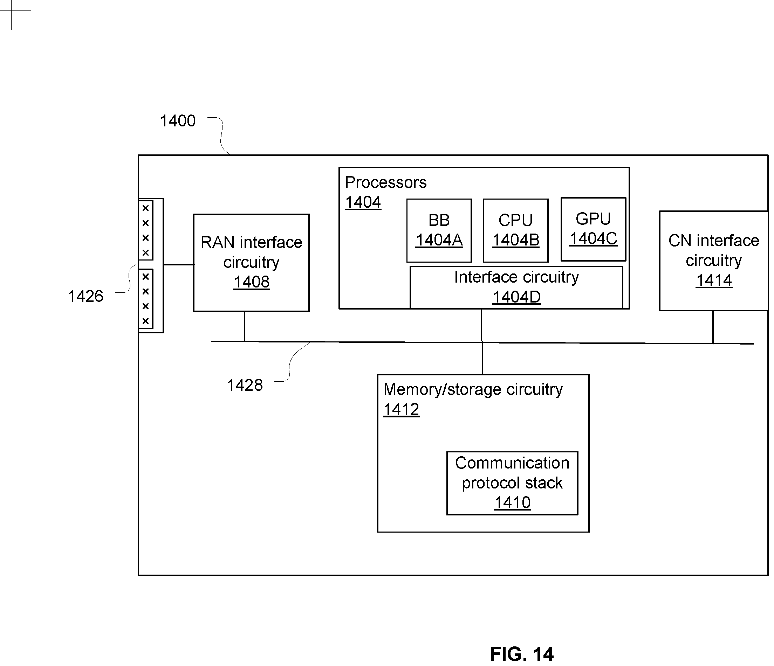

FIG. 14 illustrates a gNB 1400, in accordance with some embodiments. The gNB 1400 may be similar to and substantially interchangeable with the gNB 108 of FIG. 1. Particularly, the gNB 1400 can send configuration information, to a UE, indicating configurations of non-contiguous frequency segments in a serving cell. The gNB 1400 can also frequency segment signaling information, to the UE, activating some or all of the configured frequency resources of the non-contiguous frequency segments. The gNB 1400 can then communicate with the UE using, in the frequency domain, activated frequency resources as an aggregated set of frequency resources.

The gNB 1400 may include processors 1404, RAN interface circuitry 1408, core network (CN) interface circuitry 1412, and memory/storage circuitry 1416.

The components of the gNB 1400 may be coupled with various other components over one or more interconnects 1428.

The processors 1404, RAN interface circuitry 1408, memory/storage circuitry 1416 (including communication protocol stack 1410), antenna 1450, and interconnects 1428 may be similar to like-named elements shown and described with respect to FIG. 13.

The CN interface circuitry 1412 may provide connectivity to a core network, for example, a Fifth Generation Core network (5GC) using a 5GC-compatible network interface protocol, such as carrier Ethernet protocols, or some other suitable protocol. Network connectivity may be provided to/from the gNB 1400 via a fiber optic or wireless backhaul. The CN interface circuitry 1412 may include one or more dedicated processors or FPGAs to communicate using one or more of the aforementioned protocols. In some implementations, the CN interface circuitry 1412 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method comprising: sending, to a user equipment (UE), configuration information indicating that non-contiguous frequency segments (FSs) in a serving cell are configured for the UE, the FSs including a first FS and a second FS that are non-contiguous in a frequency domain, the first FS including first contiguous frequency resources, the second FS including second contiguous frequency resources; signaling, to the UE, that at least a first subset of the first contiguous frequency resources and a second subset of the second contiguous frequency resources are to be used for communicating with a network; and performing a communication with the UE, the communication using the first subset and the second subset as an aggregated set of frequency resources of the serving cell.

Example 2 includes a method comprising: processing configuration information indicating that non-contiguous frequency segments (FSs) in a serving cell are configured for a user equipment (UE), the FSs including a first FS and a second FS that are non-contiguous in a frequency domain, the first FS including first contiguous frequency resources, the second FS including second contiguous frequency resources; processing signaling information indicating that at least a first subset of the first contiguous frequency resources and a second subset of the second contiguous frequency resources are to be used for communicating with a network; and performing a communication with the network, the communication using the first subset and the second subset as an aggregated set of frequency resources of the serving cell.

Example 3 include the method of any preceding example 1-2, wherein the configuration information separately indicates a configuration of the first FS, wherein the configuration includes an offset with respect to a reference point and a bandwidth.

Example 4 include the method of any preceding example 1-3, wherein the configuration information indicates a bandwidth that includes the FSs, starts at the lowest frequency of the FSs, and ends at the highest frequency of the FSs, and wherein the configuration information further indicates a starting offset with respect to a reference point.

Example 5 include the method of any preceding example 1-3, wherein the configuration information indicates a bandwidth that includes the FSs, starts at the lowest frequency of the FSs, and ends at the highest frequency of the FSs, and wherein the configuration information further a starting offset with respect to the lowest frequency.

Example 6 include the method of any preceding example 1-3, wherein the configuration information indicates a bandwidth that starts at the lowest frequency of the FSs and ends at the highest frequency of the FSs, wherein the configuration information further indicates a bitmap corresponding to the frequency resources of the bandwidth, wherein each bit of the bitmap corresponds to a frequency resource within the bandwidth, and wherein a set of consecutive bits having a same binary value indicates the first FS.

Example 7 include the method of any preceding example 1-6, wherein the configuration information indicates that one or more bandwidth parts (BWPs) are configured for the first FS, wherein each BWP includes contiguous frequency resources within the first FS, wherein the method further comprises: signaling, to the UE or receiving by the UE an indication, that at least a BWP of the one or more BWPs is active, wherein the first subset includes the BWP.

Example 8 include the method of any preceding example 1-6, wherein the configuration information indicates a bandwidth that includes the FSs, wherein the configuration information further indicates that one or more bandwidth parts (BWPs) are configured within the bandwidth, wherein the method further comprises: signaling, to the UE or receiving by the UE an indication, that at least a BWP of the one or more BWPs is active, wherein the first subset corresponds to an intersection of the BWP and the first FS.

Example 9 include the method of any preceding example 1-8, wherein the signaling information includes downlink control information (DCI), wherein the DCI separately indicates a first frequency domain resource allocation (FDRA) for the first FS and a second FDRA for the second FS.

Example 10 include the method of example 9, wherein the first FDRA indicates the first subset among configured frequency resources of the first FS.

Example 11 include the method of example 9, wherein the first FDRA indicates the first subset among active frequency resources of the first FS.

Example 12 include the method of any preceding example 1-11, wherein the configuration information indicates a bandwidth that includes the FSs, wherein the signaling information includes downlink control information (DCI), wherein the DCI indicates physical resource blocks (PRBs) within the bandwidth, and wherein the first subset is determined based on an intersection of the PRBs and configured frequency resources of the first FS or active resources of the first FS.

Example 13 include the method of any preceding example 1-11, wherein the signaling information includes downlink control information (DCI), wherein the DCI indicates a set of physical resource blocks (PRBs) from among a plurality of PRBs, wherein the plurality of PRBs are numbered across the first FS and the second FS and exclude frequency resources between the first FS and the second FS.
vExample 14 include the method of any preceding example 1-11, wherein the signaling information includes downlink control information (DCI), wherein the DCI indicates a set of resource block groups (RBGs) corresponding to the FSs by using a bitmap-based frequency domain resource allocation (FDRA), wherein an active bandwidth of the first FS is extended to a nominal bandwidth that corresponds to a multiple integer of RBGs for a physical resource block (PRB) indexing purpose.

Example 15 include the method of any preceding example 1-11, wherein the signaling information includes downlink control information (DCI), wherein the DCI indicates a set of resource block groups (RBGs) corresponding to the FSs by using a bitmap-based frequency domain resource allocation (FDRA), wherein a size of an RBG is configured by the network or is based on at least one of: a bandwidth of the serving cell, an active bandwidth of the UE, or a bandwidth of frequency resources corresponding to the FSs.

Example 16 include the method of any preceding example 1-15, wherein the signaling information schedules resources that are limited to the first FS and form a control resource set on a physical downlink control channel (PDCCH) or for a set of resources on a physical uplink control channel (PUCCH).

Example 17 include the method of any preceding example 1-15, wherein the signaling information schedules resources that form a control resource set on a physical downlink control channel (PDCCH), wherein the control resource set spans the first FS and the second FS.

Example 18 include the method of any preceding example 1-17, the communication includes a reception of a reference signal or a transmission of the reference signal, wherein the signaling information maps a sequence of the reference signal to physical resources of the serving cell and indicates a first configuration of the first FS and a second configuration of the second FS, and wherein each of the first configuration and the second configuration references a common resource block of the physical resources.

Example 19 include the method of example 16, further comprising generating or receiving UE capability information indicating at least one of the maximum number of FSs per serving cell, a maximum total number of FS in all serving cells in a frequency range or across frequency ranges, or a maximum bandwidth per serving cell, and wherein the configuration information is sent by the network or is received by the UE based on the UE capability information.

Example 20 includes a user equipment (UE) or an apparatus comprising: one or more processors; and one or more memory storing instructions that, upon execution by the one or more processors, configure the UE or the apparatus to perform a method described in or related to any of the preceding examples.

Example 21 includes one or more computer-readable media storing instructions that, when executed on a user equipment (UE) or an apparatus, cause the UE or the apparatus to perform operations comprising those of a method described in or related to any of the preceding examples.

Example 22 includes an apparatus comprising means to perform one or more elements of a method described in or related to any of the preceding examples.

Example 23 includes one or more non-transitory computer-readable media comprising instructions to cause an apparatus, upon execution of the instructions by one or more processors of the apparatus, to perform one or more elements of a method described in or related to any of the preceding examples.

Example 24 includes an apparatus comprising logic, modules, or processing circuitry configured to perform one or more elements of a method described in or related to any of the preceding examples.

Example 25 includes an apparatus, a network, a base station, or a system comprising: one or more processors and one or more computer-readable media comprising instructions that, when executed by the one or more processors, cause the one or more processors to perform one or more elements of a method described in or related to any of the preceding examples.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
sending, to a user equipment (UE), configuration information indicating that non-contiguous frequency segments (FSs) in a serving cell are configured for the UE, the FSs including a first FS and a second FS that are non-contiguous in a frequency domain, the first FS including first contiguous frequency resources, the second FS including second contiguous frequency resources;
signaling, to the UE, that at least a first subset of the first contiguous frequency resources and a second subset of the second contiguous frequency resources are to be used for communicating with a network; and
performing a communication with the UE, the communication using the first subset and the second subset as an aggregated set of frequency resources of the serving cell.

2. The method of claim 1, wherein the configuration information separately indicates a configuration of the first FS, wherein the configuration includes an offset with respect to a reference point and a bandwidth.

3. The method of claim 1 or 2, wherein the configuration information indicates a bandwidth that includes the FSs, starts at the lowest frequency of the FSs, and ends at the highest frequency of the FSs, and wherein the configuration information further indicates a starting offset with respect to a reference point or the lowest frequency.

4. The method of any preceding claim, wherein the configuration information indicates a bandwidth that starts at the lowest frequency of the FSs and ends at the highest frequency of the FSs, wherein the configuration information further indicates a bitmap corresponding to the frequency resources of the bandwidth, wherein each bit of the bitmap corresponds to a frequency resource within the bandwidth, and wherein a set of consecutive bits having a same binary value indicates the first FS.

5. The method of any preceding claim, wherein the configuration information indicates that one or more bandwidth parts (BWPs) are configured for the first FS, wherein each BWP includes contiguous frequency resources within the first FS, wherein the method further comprises:
signaling, to the UE, that at least a BWP of the one or more BWPs is active, wherein the first subset includes the BWP.

6. The method of any preceding claim, wherein the configuration information indicates a bandwidth that includes the FSs, wherein the configuration information further indicates that one or more bandwidth parts (BWPs) are configured within the bandwidth, wherein the method further comprises:
signaling, to the UE, that at least a BWP of the one or more BWPs is active, wherein the first subset corresponds to an intersection of the BWP and the first FS.

7. A method comprising:
processing configuration information indicating that non-contiguous frequency segments (FSs) in a serving cell are configured for a user equipment (UE), the FSs including a first FS and a second FS that are non-contiguous in a frequency domain, the first FS including first contiguous frequency resources, the second FS including second contiguous frequency resources;
processing signaling information indicating that at least a first subset of the first contiguous frequency resources and a second subset of the second contiguous frequency resources are to be used for communicating with a network; and
performing a communication with the network, the communication using the first subset and the second subset as an aggregated set of frequency resources of the serving cell.

8. The method of claim 7, wherein the signaling information includes downlink control information (DCI), wherein the DCI separately indicates a first frequency domain resource allocation (FDRA) for the first FS and a second FDRA for the second FS, wherein the first FDRA indicates the first subset among configured frequency resources of the first FS or among active frequency resources of the first FS.

9. The method of claim 7 or 8, wherein the configuration information indicates a bandwidth that includes the FSs, wherein the signaling information includes downlink control information (DCI), wherein the DCI indicates physical resource blocks (PRBs) within the bandwidth, and wherein the first subset is determined based on an intersection of the PRBs and configured frequency resources of the first FS or active resources of the first FS.

10. The method of any of claims 7 to 9, wherein the signaling information includes downlink control information (DCI), wherein the DCI indicates a set of physical resource blocks (PRBs) from among a plurality of PRBs, wherein the plurality of PRBs are numbered across the first FS and the second FS and exclude frequency resources between the first FS and the second FS.

11. The method of any of claims 7 to 10, wherein the signaling information includes downlink control information (DCI), wherein the DCI indicates a set of resource block groups (RBGs) corresponding to the FSs by using a bitmap-based frequency domain resource allocation (FDRA), wherein at least one of: (i) an active bandwidth of the first FS is extended to a nominal bandwidth that corresponds to a multiple integer of RBGs for a physical resource block (PRB) indexing purpose, or (ii) a size of an RBG is configured by the network or is based on at least one of: a bandwidth of the serving cell, an active bandwidth of the UE, or a bandwidth of frequency resources corresponding to the FSs.

12. An apparatus comprising:
a receiver;
a transmitter; and
processing circuitry communicatively coupled with the receiver and the transmitter and configured to:
process configuration information indicating that non-contiguous frequency segments (FSs) in a serving cell are configured for a user equipment (UE), the FSs including a first FS and a second FS that are non-contiguous in a frequency domain, the first FS including first contiguous frequency resources, the second FS including second contiguous frequency resources;
process signaling information indicating that at least a first subset of the first contiguous frequency resources and a second subset of the second contiguous frequency resources are to be used for communicating with a network; and
perform a communication with the network, the communication using the first subset and the second subset as an aggregated set of frequency resources of the serving cell.

13. The apparatus of claim 12, wherein the signaling information schedules resources that are limited to the first FS and form a control resource set on a physical downlink control channel (PDCCH) or for a set of resources on a physical uplink control channel (PUCCH).

14. The apparatus of claim 12 or 13, wherein the communication includes a reception of a reference signal, wherein the signaling information maps a sequence of the reference signal to physical resources of the serving cell and indicates a first configuration of the first FS and a second configuration of the second FS, and wherein each of the first configuration and the second configuration references a common resource block of the physical resources.

15. The apparatus of any of claims 12 to 14, wherein the processing circuitry is further configured to generate UE capability information indicating at least one of the maximum number of FSs per serving cell, a maximum total number of FS in all serving cells in a frequency range or across frequency ranges, or a maximum bandwidth per serving cell, and wherein the configuration information is sent by the network based on the UE capability information.
